# EUROPEAN PATENT APPLICATION

(11) **EP 2 117 261 A1**
(43) Date of publication of application: **11.11.2009**
(21) Application number: 08166163.9
(22) Date of filing: 08.10.2008
(51) Int. Cl.: H04W 4/08

(54) **Method for assisting a wireless device to find closed subscriber group cells**

(30) Priority: 28.04.2008 US 111048
(71) Applicant: Research In Motion Limited, Waterloo, Ontario N2L 3W8 (CA)
(72) Inventor: Buckley, Adrian, Tracy 95376 (US); Kim, Youngae, Mississauga Ontario L4W 5M4 (CA); Howell, Stephen A, Barnwood, Gloucestershire GL4 3TQ (GB); Alfano, Nicholas, Stratford-Upon-Avon, CV37 7JS (US)
(74) Representative: Hibbert, Juliet Jane Grace

(57) **Abstract**

A method of establishing a wireless link is provided. The method comprises a user equipment (UE) 102 receiving a transmission from a closed subscriber group (CSG) cell 104. When the CSG cell 104 is associated with a CSG identified in a user defined list 120 of CSGs stored in the UE 102, the method further comprises establishing a wireless link between the UE 102 and the CSG cell 104.

## Description

Small cellular base stations may be deployed to provide wireless access in residential, small business environments, corporate campuses, or in public buildings. For example, wireless access and/or wireless coverage from macro cellular base stations may be variable and unreliable inside buildings, for example inside an airport terminal, inside a grocery store, and inside an office building. As is known, cellular radio frequency (RF) transmissions may be blocked or severely attenuated by building structures and may not penetrate buildings well. Small cellular base stations may be positioned inside buildings to provide line-of-sight or near line-of-sight wireless links to mobile wireless devices inside the buildings. The small cellular base stations may be connected by wired link to the wired communications network. Small cellular base stations may provide wireless access according to one or more wireless communications standards including global system for mobile communications (GSM), code division multiplex access (CDMA), universal mobile telephone system (UMTS), long term evolution (LTE), worldwide interoperability microwave access (WiMAX), and others. Small cellular base stations may be referred to by a variety of names including femtocells, picocells, nanocells, and others.

### GNERAL

In an embodiment, a method of establishing a wireless link may be provided. The method may comprise a user equipment (UE) receiving a transmission from a closed subscriber group (CSG) cell. When the CSG cell is associated with a CSG identified in a user defined list of CSGs stored in the UE, the method further comprises establishing a wireless link between the UE and the CSG cell.

In another embodiment, a UE may be provided. The UE may comprise a memory, a radio transceiver, and a selector component. The memory may contain a user defined list of CSGs. The radio transceiver may receive a transmission from an at least one CSG cell and establishes a wireless link with a selected one of the at least one CSG cell. The selector component, when one of the at least one CSG cell is associated with a CSG identified in the user defined list of CSGs, may determine the selected one of the at least one CSG cells and identifies the selected one of the at least one CSG cell to the radio transceiver.

In another embodiment a method of provisioning a UE may be provided. The method may comprise scanning a frequency bandwidth, identifying an at least one CSG cell broadcasting in the frequency bandwidth, and displaying information about a CSG associated with the at least one CSG cell identified. The method may also comprise receiving an input selecting the CSG. When the CSG cell is associated with a user CSG, the method may comprise provisioning the CSG to a user defined CSG list stored by the UE. By this method the UE may use the user defined CSG list to establish wireless links with CSG cells.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.

FIG. 1 illustrates a system according to an embodiment of the disclosure.

FIG. 2 illustrates a method according to an embodiment of the disclosure.

FIG. 3 illustrates a user equipment (UE) according to some embodiments of the disclosure.

FIG. 4 illustrates a block diagram of a UE according to some embodiments of the disclosure.

FIG. 5 illustrates a software architecture of a UE according to some embodiments of the disclosure.

FIG. 6 illustrates an exemplary general purpose computer system suitable for implementing the some aspects of the embodiments of the disclosure.

### DESCRIPTION OF PREFERRED EMBODIMENTS

It should be understood at the outset that although illustrative implementations of one or more embodiments are illustrated below, the disclosed systems and methods may be implemented using any number of techniques, whether currently known or in existence. The disclosure should in no way be limited to the illustrative implementations, drawings, and techniques illustrated below, but may be modified within the scope of the appended claims along with their full scope of equivalents.

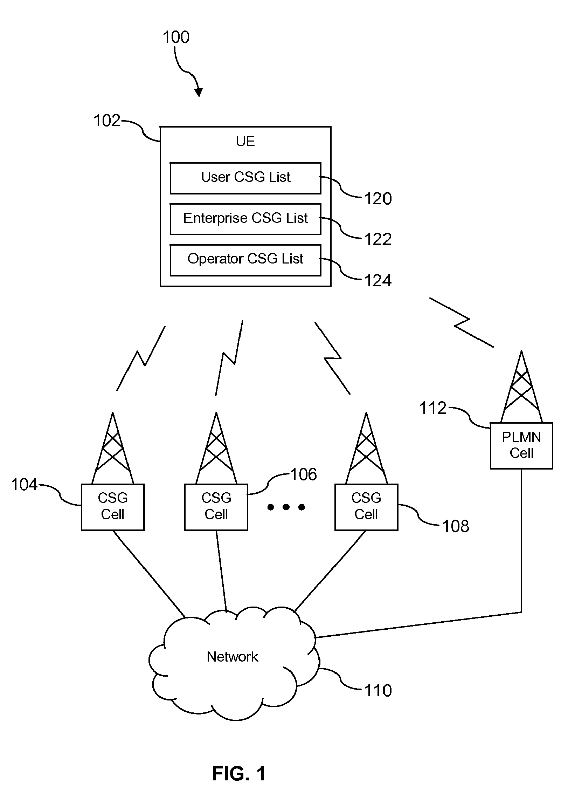

Turning now to FIG. 1, a system 100 for wireless communication is described. The system 100 comprises a user equipment (UE) 102, a first closed subscriber group (CSG) cell 104, a second CSG cell 106, a third CSG cell 108, and a public land mobile network (PLMN) cell 112. While three CSG cells 104-108 and one PLMN cell 112 are illustrated in FIG. 1, it is understood that there may be either more or fewer CSG cells 102-108 and PLMN cells 112 in the system 100. The CSG cells 104-108 and the PLMN cell 112 are in communication with a network 110.

The UE 102 may be any of a variety of wireless or wireless enabled devices including a mobile phone, a personal digital assistant (PDA), a media player, a laptop computer, a tablet computer, a desktop computer, and other electronic device. The UE 102 may communicate with the network 110 via the PLMN cell 112. In some circumstances, the UE 102 may communicate with the network 110 via one of the CSG cells 104-108. The UE 102 may communicate with the PLMN cell 112 and/or the CSG cells 104-108 using any of a variety of mobile communications protocols including, but not limited to, global system for mobile communications (GSM), universal mobile telephone system (UMTS), code division multiple access (CDMA), long term evolution (LTE), worldwide interoperability for microwave access (WiMAX), and others. In an embodiment, some aspects of the UE 102 may be implemented in a form similar to a handset. Handsets are discussed in greater detail hereinafter. In another embodiment, some aspects of the UE 102 may be implemented in the form similar to a general purpose computer system. General purpose computer systems are discussed in greater detail hereinafter.

The UE 102 may comprise one or more CSG lists, for example a user CSG list 120, an enterprise CSG list 122, an operator CSG list 124, and possibly other CSG lists. The CSG lists 120-124 may each comprise a plurality of entries, each entry identifying a CSG that the UE 102 may access and other related information. In an embodiment, each CSG list 120-124 may comprise at least ten entries. A single CSG may be associated with one CSG cell 104-108 or a plurality of CSG cells 104-108. The UE 102 may store the CSG lists 120-124 in memory within the UE 102, for example in non-removable memory or in removable memory. In an embodiment, the UE 102 may store one or more of the CSG lists 120-124 in a subscriber identity module (SIM) or a universal subscriber identity module (USIM) removable memory. In other embodiments, the UE 102 may store one or more of the CSG lists 120-124 in other memory components. Other memory components that might be uses as well include, but are not limited to, PC Card PCMCIA, CompactFlash I CF-I, CompactFlash II CF-II, SmartMedia SM / SMC, Memory Stick MS, Memory Stick Duo MSD, Memory Stick PRO Duo MSPD, Memory Stick PRO-HG Duo MSPDX, Memory Stick Micro M2 M2, Multimedia Card MMC, Multimedia Card RS-MMC, MMCmicro Card MMCmicro, Secure Digital Card SD, SxS SxS, Universal Flash Storage UFS, miniSD Card miniSD, microSD Card microSD, xD-Picture Card xD, Intelligent Stick iStick, Serial Flash Module SFM, µ card µcard, NT Card NT NT+. The CSG lists 120-124 may be partially stored in removable memory and partially stored in non-removable memory. For example, the user CSG list 120 comprising ten entries may store four entries in removable memory and six entries in non-removable memory.

The CSG cells 104-106 may be owned and/or operated by private individuals, enterprises, and operating companies. As an example, the first CSG cell 104 may be owned by a private individual and be associated with a first CSG. The second CSG cell 106 and the third CSG cell 108 may be owned by an enterprise and be associated with a second CSG. Alternatively, the second CSG cell 106 may be associated with the second CSG while the third CSG cell 108 may be associated with a third CSG. Alternatively, the first CSG cell and the third CSG cell may be owned by an operating company and both be associated with a fourth CSG. The second CSG cell 106 may be owned by an enterprise and associated with a fifth CSG. The system 100 may comprise any number of CSG cells and any combination of individually owned CSG cells, enterprise owned CSG cells, and operator owned CSG cells. Any number of CSGs may be associated with the CSG cells, with the restriction that there may be no more CSGs than CSG cells.

An operating company, for example a company operating a public wireless communication network, may deploy a plurality of CSG cells 104-106 throughout its service area, for example in airport terminals, in public venues such as sports stadiums, and others. The operating company may associate each of its CSG cells with a single CSG. Alternatively, the operating company may associate some of its CSG cells with a first CSG and others of its CSG cells with a second CSG and/or additional CSGs. The operating company may authorize different UEs 102 to access different CSGs and the CSG cells 104-108 associated with those CSGs, according to a service class and/or a subscription level of the UEs 102. The operating company may authorize access of the UE 102 to the CSGs associated with the CSG cells 104-108 deployed by the operating company, in part, by provisioning one or more entries associated with those CSGs into the operator CSG list 124. In an embodiment, the operating company may complete the process of authorizing access of the UE 102 to the CSGs associated with the CSG cells 104-108 by provisioning authorization for the UE 102 into each of the CSG cells 104-108. The operating company may provision the CSG into the operator CSG list 124 using provisioning methods according to the open mobile alliance (OMA) data management (DM), OMA client provisioning (CP), OMA over the air (OTA) provisioning, or proprietary provisioning methods. The provisioning may employ various transport mechanisms including cellular broadcast, short message service (SMS), unstructured supplementary service data (USSD), multimedia broadcast multicast service (MBMS), a generic internet protocol pipe, and other mechanisms.

The entries in the operator CSG list may include a CSG identifier as well as other information, for example a network identifier associated with the operator. The network identifier may be of use to subscribers when they roam out of a service area of a first operator into the service area of a second operator, because CSG identities may not be unique across the boundaries of multiple operators. If a UE 102 camps on a CSG belonging to a different operator than the operator that provides service to the UE 102, the UE 102 may not be able to establish a wireless link with the CSG even though it may have the same CSG identity. In some contexts herein, the expression camping on a CSG may designate attempting to establish a wireless link with a CSG cell associated with the subject CSG. By considering and taking into account both the CSG identity and the network identity, the UE 102 may be able to overcome the problem of camping on a CSG that is not provisioned to authorize the UE 102 to establish a wireless link with a CSG cell associated with the CSG. In some embodiments, the other information contained by the entries in the operator CSG list may also include a timer interval or other time related parameter that may be used to promote a guest user status or temporary access status operation mode for the UE 102.

Similarly, an enterprise, for example a corporation having multiple office locations, may deploy a plurality of CSG cells 104-106 throughout its office locations. The enterprise may authorize the UE 102 to access one or more of its CSGs, in part, by provisioning one or more entries into the enterprise CSG list 122. The entries may each include a CSG identifier as well as other information, for example a network identifier or an enterprise identifier associated with the enterprise. In some embodiments, the other information contained by the entries in the enterprise CSG list may also include a timer interval or other time related parameter that may be used to promote a guest user status or temporary access status operation mode for the UE 102. In an embodiment, the enterprise may complete the process of authorizing access of the UE 102 to the CSGs associated with the CSG cells 104-108 by provisioning authorization for the UE 102 into each of the CSG cells 104-108. The enterprise may provision the CSG into the enterprise CSG list 122 using provisioning methods according to OMA DM, OMA CP, OMA OTA provisioning, or proprietary provisioning methods. The provisioning may employ various transport mechanisms including cellular broadcast, SMS, USSD, MBMS, a generic internet protocol pipe, and other mechanisms.

Private individuals owning a CSG cell may authorize the UE 102 to access their CSG cell. The UE 102 may scan a wide band of frequencies and identify one or more serving CSG cells 104-108, for example CSG cells 104-108 broadcasting CSGs or other information promoting discovery of the CSGs or the CSG cells 104-108. An interface of the UE 102 may display a list of the one or more serving CSG cells 104-108 discovered during the wide band scan along with appropriate information associated with the CSGs to which the CSG cells 104-108 belong. This information could be that the CSG cell is already on a list stored in the UE and if it's on a list which list e.g. textual indication such as "user list" or an icon of some form or both etc. The interface of the UE 102 may promote selecting one or more of the CSGs for provisioning into one of the user CSG list 120, the enterprise CSG list 122, and/or the operator CSG list 124. Provisioning the CSG into the CSG lists 120-124 involves adding new entries into the CSG lists 120-124. The entries may each include a CSG identity and other information. The other information may include, for example, a network identifier and or broadcast name from the CSG cell, frequency the CSG cell(s) operator on, Band information such as GSM 850, 900, 1800, LTE, UTRAN 2100 etc. The other information may also include a timer interval or other time related parameter that may be used to promote a guest user status or temporary access status operation mode for the UE 102. Alternatively, the interface of the UE 102 may promote other methods of adding entries to the CSG lists 120-124. The selected CSG may be provisioned into the subject CSG list 120-124 immediately or when the UE 102 successfully registers with the associated CSG cell 104-108.

When the UE 102 checks for a serving cell or for radio access to the network 110 and discovers the first CSG cell 104, the UE 102 may check to determine if the CSG associated with the first CSG cell 104 is listed in one of the CSG lists 120-124. If the CSG associated with the first CSG cell 104 is provisioned in one of the CSG lists 120-124, the UE 102 may establish a wireless link with the first CSG cell 104. If the UE 102 does not find the CSG associated with the first CSG cell 104, the UE 102 does not attempt to establish a wireless link with the first CSG cell 104. It should be understood that the presence or absence of an entry in one of the CSG lists 120-124 does not determine whether the UE 102 is authorized to access a CSG. The entries in the CSG lists 120-124 are used to decide if the UE 102 should attempt to establish a wireless link with the CSG cell 104-108. If the CSG cell 104-108, for some reason, for example a provisioning oversight, does not contain appropriate authorization for the UE 102, the UE 102 may find an entry in one of the CSG lists 120-124 that identifies the CSG to which the CSG cell 104-108 belongs and attempt to establish a wireless link with the CSG cell 104-108 but be denied authorization and the attempt to establish the wireless link will fail.

If the UE 102 establishes a link with a CSG associated with a temporary access or a guest access status, as for example if there is a timer interval parameter value or other appropriate indication in the associated entry in the CSG list 120-124, the UE 102 may determine when the temporary access and/or temporary authorization expires and tears down the wireless link to the CSG cell 104-108 after the expiration of the temporary authorization periods. In an embodiment, the interface of the UE 102 may provide alerts in advance of tearing down the wireless link to the CSG cell 104-108, for example audio alerts, visual alerts, vibration alerts, and other alerts. In an embodiment, when the temporary authorization period associated with an entry in a CSG list 120-124 expires, the entry may be marked as void or otherwise marked as unavailable for providing wireless access. The UE will then attempt to camp on macro cell if available and not on the CSG cell. In some embodiments, a reminder indicator may promote the UE giving warning of the expiration of the temporary authorization period before the time period of the temporary authorization expires. In these embodiments, the user may be able to set a reminder time period interval.

In an embodiment, the UE 102 may promote selection of the CSG cell 104-108 based on an input received from the interface. This may be referred to as manual CSG cell selection. The UE 102 may display the CSGs that are available, for example the CSGs that are associated with the CSG cells 104-108 that the UE 102 has detected. In an embodiment, the CSGs that are available may be displayed in order as first all available CSGs associated with entries in the user CSG list 120 are displayed in order of their listing in the user CSG list 120, second all available CSGs associated with entries in the operator CSG list 124 are displayed in order of their listing in the operator CSG list 124, and third all available CSGs associated with entries in the enterprise CSG list 122 are displayed in order of their listing in the enterprise CSG list 122. In addition each CSG maybe annotated indicating which list it is on. When the UE 102 receives an input selecting one of the displayed CSGs, the UE 102 attempts to establish a wireless link to the CSG cell 104-108 associated with the selected CSG. The order of the entries in the CSG lists 120, 122, 124 may be referred to as a priority order or a prioritization of the entries and/or the CSGs.

In another embodiment, the UE 102 may display the available CSGs in a different order. The UE 102 may list the CSGs that are available in order as first all available CSGs associated with entries in the user CSG list 120 that are stored in a removable memory of the UE 102 are displayed in order of their listing in the user CSG list 120, second all available CSGs associated with entries in the operator CSG list 124 that are stored in a removable memory of the UE 102 are displayed in order of their listing in the operator CSG list 124, and third all available CSGs associated with entries in the enterprise CSG list 122 that are stored in the removable memory of the UE 102 are displayed in order of their listing in the enterprise CSG list 122. If none of the available CSGs are associated with entries in the CSG lists 120-124 that are stored in removable memory, the UE 102 may display the available CSGs in order as first all available CSGs associated with entries in the user CSG list 120 are displayed in order of their listing in the user CSG list 120 in the none removable memory, second all available CSGs associated with entries in the operator CSG list 124 are displayed in order of their listing in the operator CSG list 124 in the none removable memory, and third all available CSG associated with entries in the enterprise CSG list 122 are displayed in order of their listing in the enterprise CSG list 122 in the none removable memory. In other embodiments, other methods of displaying and/or manually selecting the CSG cells 104-108 may be employed.

In an embodiment, the UE 102 may automatically select to establish a wireless link to one of a PLMN cell, for example the PLMN cell 112, or one of a plurality of detected CSG cells 104-108 based on whether the CSG cells 104-108 are identified in the user CSG list 120, the enterprise CSG list 122, and the operator CSG list 124. In an embodiment, the UE 102 may promote a user configuring the UE 102 to prefer selection of a CSG cell 104-108 to a PLMN cell for establishing the wireless link to the network 110. In the standard configuration, standard PLMN selection procedures may take precedence. In the standard configuration, if user controlled PLMN data is available, the UE 102 will attempt to establish a wireless link to a PLMN cell associated with the user controlled PLMN data. If no wireless link to a PLMN cell has been established, if operator controlled PLMN data is available, the UE 102 will attempt to establish the wireless link to a PLMN cell associated with the operator control PLMN data.

The above described automatic selection may be initiated by the UE 102, such as upon power-up when there is no PLMN connectivity. Automatic scan and selection might also occur when the UE 102 is attached to a PLMN and initiated, for example, by a background timer causing the UE 102 to re-scan for a wireless link to one of the PLMN cells. The user of the UE 102 might initiate the scan in either of these instances as well. In any event, the UE 102 during or after frequency scanning may take various steps, such as but not limited to those described above, to select a wireless link.

If no wireless link has been established with a PLMN cell associated with the user controlled PLMN data, or if the UE 102 is configured to prefer selection of a CSG cell 104-108, the UE 102 may attempt to establish a wireless link with an available CSG associated with entries in the user CSG list 120 that is stored in a removable memory of the UE 102, selecting the CSG associated with the highest entry in the user CSG list 120 if multiple available user CSGs are found in the removable memory of the UE 102. If no wireless link has been established with a user CSG cell 104-108, the UE 102 may attempt to establish a wireless link with an available CSG associated with entries in the operator CSG list 124 that is stored in a removable memory of the UE 102, selecting the CSG associated with the highest entry in the operator CSG list 124 if multiple available operator CSGs are found in the removable memory of the UE 102. If no wireless link has been established with a user CSG cell, or an operator CSG cell, then the UE 102 attempts to establish the wireless link with a CSG cell 104-108 associated with first an available CSG associated with entries in the user CSG list 120, second an available CSG associated with entries in the operator CSG list 124, and third an available CSG associated with entries in the enterprise CSG list 122. In any case where multiple available CSGs are associated with entries in one of the CSG lists 120-124, the CSG cell 104-108 is selected that is associated with the entry in a higher position and/or a higher priority position in the CSG list 120-124. In other embodiments, other methods and processes for selecting to establish a wireless link with PLMN cells and CSG cells 104-108 may be employed.

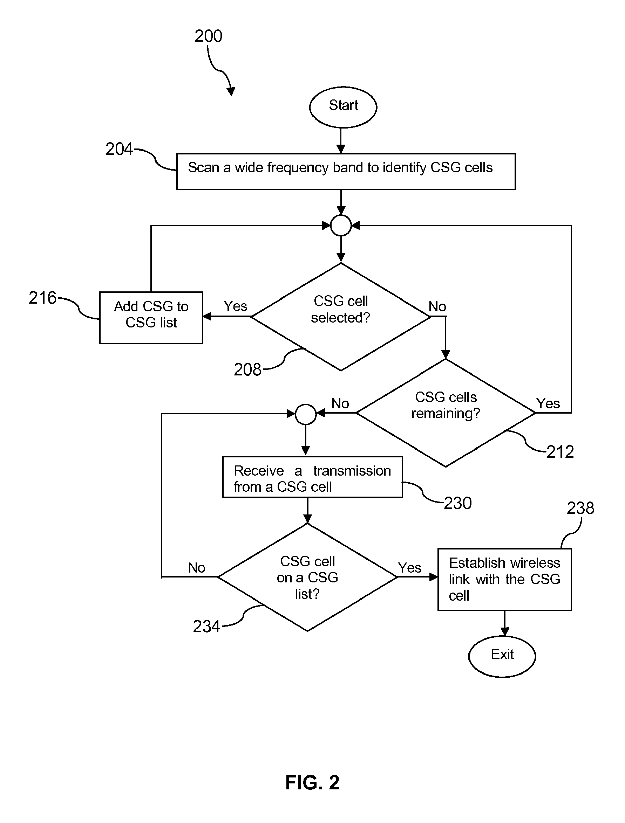

Turning now to FIG. 2, a method 200 is described. At block 204, the UE 102 scans a wide frequency band to discover and identify CSG cells 104-108. The CSG cells 104-108 may broadcast or otherwise transmit a beacon or other signal that provides information about the CSG cells 104-108. This information may be referred to as CSG information. In different embodiments, the CSG information may provide the CSG identity, the network identity, and other information associated with the CSG cell 104-108 transmitting the beacon and/or signal. In an embodiment, the UE 102 may complete the scan, storing the CSG information for processing later. In an alternative embodiment, the UE 102 may stop and process the CSG information according to the processing blocks following, before resuming the scanning of the wide frequency band.

In block 208, CSG information is presented for display by the UE 102. If the interface of the UE 102 receives a negative selection input, the processing proceeds to block 212. If additional CSG information remains to be processed, the process returns to block 208. In block 208, if the interface of the UE 102 receives a selection input, the processing proceeds to block 216 where the CSG information is added to one of the CSG lists 120-124. For example, if the CSG information is related to a user CSG cell, the CSG information is stored as an entry in the user CSG list 120. If the CSG information is related to an enterprise CSG cell, the CSG information is stored in an entry in the enterprise CSG list 122. If the CSG information is related to an operator CSG cell, the CSG information is stored in an entry in the operator CSG list 124. In an embodiment, CSG information that is stored as a new entry in the CSG lists 120-124 are added at the end of the CSG list 120-124, and hence in lowest priority order. In an embodiment, the UE 102 promotes adjusting and reordering the priority orders of entries in the CSG lists 120-124. After adding the CSG information to the appropriate CSG list 120-124, the processing returns to block 208. By iterating through blocks 208, 212, and 216, the method 200 analyzes and stores entries in the appropriate CSG lists 120-124. When all CSG information obtained during the scan of the wide frequency band is completed, the process proceeds to block 230. One skilled in the art will readily appreciate that the processing after block 212 and after block 216 could return to block 204, in the case where CSG information is processed at the time that it is discovered, which was mentioned as an alternative approach to scanning the wide frequency band. Additionally, in this alternative approach to scanning the wide frequency band, the UE 102 may permit inputting a selection to interrupt and to stop the on-going scan of the wide frequency band and to proceed directly to block 230 rather than continuing to scan.

In block 230, the UE 102 receives a transmission from the CSG cell 104-108. The transmission may be a beacon, a pilot signal, or other transmission that identifies the CSG cell 104-108 and the identity of the CSG that the CSG cell 104-108 is associated with. The processing proceeds to block 234 where if the CSG is associated with an entry in one of the CSG lists 120-124, the processing proceeds to block 238. In block 238, the UE 102 establishes a wireless link with the CSG cell and the method 200 exits. In block 234, if the CSG is not associated with an entry in one of the CSG lists 120-124, the processing returns to block 230. In this way, the UE 102 keeps listening or receiving until a CSG cell 104-108 is discovered that the UE 102 lists in one of its CSG lists 120-124. In an embodiment, when multiple transmissions from multiple CSG cells 104-108 are concurrently detected, the UE 102 may select to establish a wireless link with one of the CSG cells 104-108 based on prioritization algorithms as discussed above. It will be appreciated by one skilled in the art that the method 200 may be divided into two parts or two methods - a method for scanning, identifying and provisioning CSGs associated with blocks 204, 208, 212, and 216 and a method for establishing a link with a CSG cell associated with blocks 230, 234, and 238.

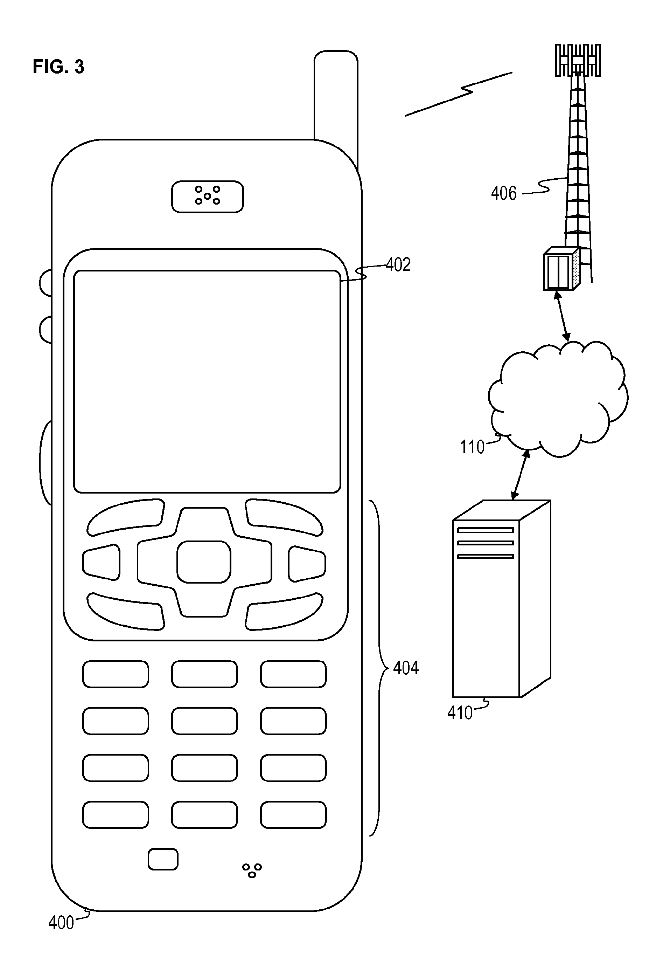

FIG. 3 shows a wireless communications system including the handset 400. FIG. 3 depicts the handset 400, which may be operable for implementing aspects of the present disclosure, for example the UE 102, but the present disclosure should not be limited to these implementations. Though illustrated as a mobile phone, the handset 400 may take various forms including a wireless handset, a pager, a personal digital assistant (PDA), a portable computer, a tablet computer, or a laptop computer. Many suitable handsets combine some or all of these functions. In some embodiments of the present disclosure, the handset 400 is not a general purpose computing device like a portable, laptop or tablet computer, but rather is a special-purpose communications device such as a mobile phone, wireless handset, pager, or PDA. The handset 400 may support specialized activities such as gaming, inventory control, job control, and/or task management functions, and so on.

The handset 400 includes a display 402 and a touch-sensitive surface or keys 404 for input by a user. In an embodiment, the interface of the UE 102 discussed above may comprise the display 402 and the touch-sensitive surface or keys 404. The handset 400 may present options for the user to select, controls for the user to actuate, and/or cursors or other indicators for the user to direct. The handset 400 may further accept data entry from the user, including numbers to dial or various parameter values for configuring the operation of the handset. The handset 400 may further execute one or more software or firmware applications in response to user commands. These applications may configure the handset 400 to perform various customized functions in response to user interaction. Additionally, the handset 400 may be programmed and/or configured over-the-air, for example from a wireless base station, a wireless access point, or a peer handset 400.

The handset 400 may execute a web browser application which enables the display 402 to show a web page. The web page may be obtained via wireless communications with a cell tower 406, for example the PLMN cell 112, a wireless network access node, a peer handset 400 or any other wireless communication network or system. The cell tower 406 (or wireless network access node) is coupled to a wired network 408, for example the network 110, such as the Internet. Via the wireless link and the wired network, the handset 400 has access to information on various servers, such as a server 410. The server 410 may provide content that may be shown on the display 402. Alternately, the handset 400 may access the cell tower 406 through a peer handset 400 acting as an intermediary, in a relay type or hop type of connection.

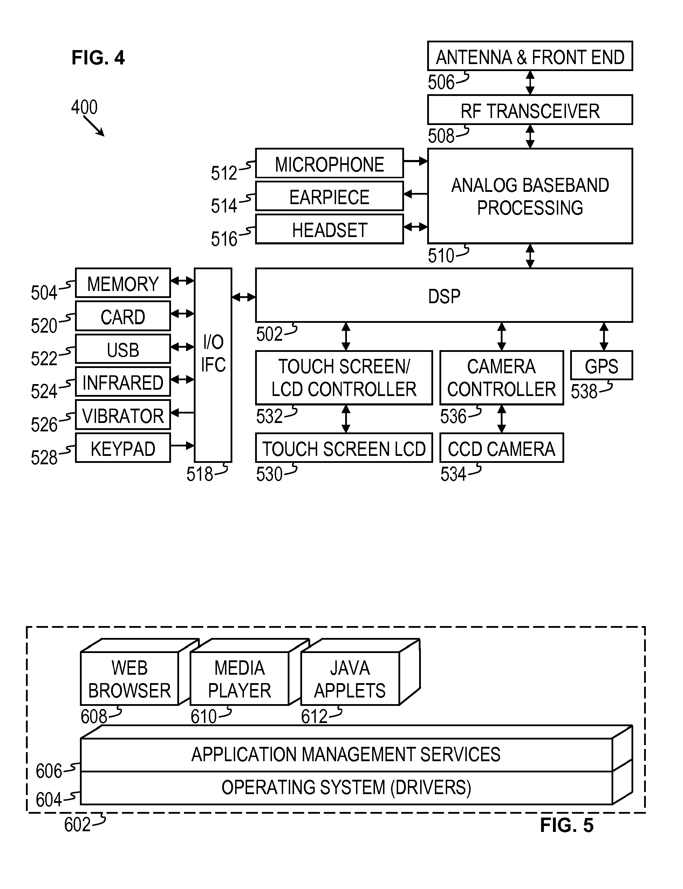

FIG. 4 shows a block diagram of the handset 400. While a variety of known components of handsets 400 are depicted, in an embodiment a subset of the listed components and/or additional components not listed may be included in the handset 400. The handset 400 includes a digital signal processor (DSP) 502 and a memory 504. As shown, the handset 400 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538. In an embodiment, the handset 400 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the handset 400 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502. In an embodiment, the memory 504 may comprise removable memory and/or external memory. The memory 504 may also comprise fixed and/or internal memory, for example memory that is not readily removable by a normal user of the handset 400. Memory 504 may include a variety of memories including, but not limited to, universal integrated circuit card (UICC) memory, subscriber identity module (SIM) memory, universal subscriber identity module (USIM) memory, removable user identity module (R-UIM) memory, personal computer memory card international association (PCMCIA) memory, compact flash memory, memory stick memory, and others. In an embodiment, the memory 504, or other memory (not shown), may store one or more CSG lists. For example, the memory 504, or other memory (not shown), may store one or more of the user CSG list 120, the enterprise CSG list 122, the operator CSG list 124, and other CSG lists.

The antenna and front end unit 506 may be provided to convert between wireless signals and electrical signals, enabling the handset 400 to send and receive information from a cellular network or some other available wireless communications network or from a peer handset 400. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast fourier transforming (IFFT)/fast fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF transceiver 408, portions of the antenna and front end 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the handset 400 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast fourier transforming (IFFT)/fast fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast fourier transforming, and cyclic prefix appending, and for a receiver function the DSP 502 may perform cyclic prefix removal, fast fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB port 522 and the infrared port 524. The USB port 522 may enable the handset 400 to function as a peripheral device to exchange information with a personal computer or other computer system. The infrared port 524 and other optional ports such as a Bluetooth interface or an IEEE 802.11 compliant wireless interface may enable the handset 400 to communicate wirelessly with other nearby handsets and/or wireless base stations.

The input/output interface 518 may further connect the DSP 502 to the vibrator 526 that, when triggered, causes the handset 400 to vibrate. The vibrator 526 may serve as a mechanism for silently alerting the user to any of various events such as an incoming call, a new text message, and an appointment reminder.

The keypad 528 couples to the DSP 502 via the interface 518 to provide one mechanism for the user to make selections, enter information, and otherwise provide input to the handset 400. Another input mechanism may be the touch screen LCD 530, which may also display text and/or graphics to the user. The touch screen LCD controller 532 couples the DSP 502 to the touch screen LCD 530.

The CCD camera 534 enables the handset 400 to take digital pictures. The DSP 502 communicates with the CCD camera 534 via the camera controller 536. The GPS sensor 538 is coupled to the DSP 502 to decode global positioning system signals, thereby enabling the handset 400 to determine its position. In another embodiment, a camera operating according to a technology other than charge coupled device cameras may be employed. Various other peripherals may also be included to provide additional functions, e.g., radio and television reception.

FIG. 5 illustrates a software environment 602 that may be implemented by the DSP 502. The DSP 502 executes operating system drivers 604 that provide a platform from which the rest of the software operates. The operating system drivers 604 provide drivers for the handset hardware with standardized interfaces that are accessible to application software. The operating system drivers 604 include application management services ("AMS") 606 that transfer control between applications running on the handset 400. Also shown in FIG. 5 are a web browser application 608, a media player application 610, and JAVA applets 612. The web browser application 608 configures the handset 400 to operate as a web browser, allowing a user to enter information into forms and select links to retrieve and view web pages. The media player application 610 configures the handset 400 to retrieve and play audio or audiovisual media. The JAVA applets 612 configure the handset 400 to provide games, utilities, and other functionality.

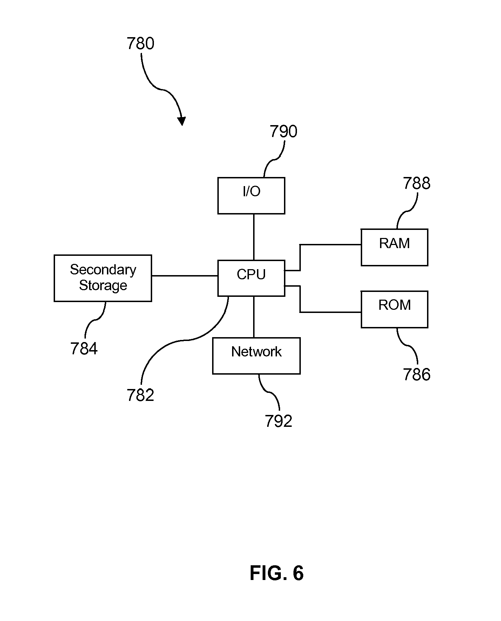

Some aspects of the system 100 described above, for example one or more of the CSG cells 104, 106, 108, and the PLMN cell 112 may be implemented on any general-purpose computer with sufficient processing power, memory resources, and network throughput capability to handle the necessary workload placed upon it. FIG. 6 illustrates a typical, general-purpose computer system suitable for implementing one or more embodiments disclosed herein. The computer system 780 includes a processor 782 (which may be referred to as a central processor unit or CPU) that is in communication with memory devices including secondary storage 784, read only memory (ROM) 786, random access memory (RAM) 788, input/output (I/O) devices 790, and network connectivity devices 792. The processor may be implemented as one or more CPU chips.

The secondary storage 784 is typically comprised of one or more disk drives or tape drives and is used for non-volatile storage of data and as an overflow data storage device if RAM 788 is not large enough to hold all working data. Secondary storage 784 may be used to store programs which are loaded into RAM 788 when such programs are selected for execution. The ROM 786 is used to store instructions and perhaps data which are read during program execution. ROM 786 is a non-volatile memory device which typically has a small memory capacity relative to the larger memory capacity of secondary storage. The RAM 788 is used to store volatile data and perhaps to store instructions. Access to both ROM 786 and RAM 788 is typically faster than to secondary storage 784.

I/O devices 790 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 792 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity devices 792 may enable the processor 782 to communicate with an Internet or one or more intranets. With such a network connection, it is contemplated that the processor 782 might receive information from the network, or might output information to the network in the course of performing the above-described method steps. Such information, which is often represented as a sequence of instructions to be executed using processor 782, may be received from and outputted to the network, for example, in the form of a computer data signal embodied in a carrier wave

Such information, which may include data or instructions to be executed using processor 782 for example, may be received from and outputted to the network, for example, in the form of a computer data baseband signal or signal embodied in a carrier wave. The baseband signal or signal embodied in the carrier wave generated by the network connectivity devices 792 may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 782 executes instructions, codes, computer programs, scripts which it accesses from hard disk, floppy disk, optical disk (these various disk based systems may all be considered secondary storage 784), ROM 786, RAM 788, or the network connectivity devices 792. While only one processor 792 is shown, multiple processors may be present. Thus, while instructions may be discussed as executed by a processor, the instructions may be executed simultaneously, serially, or otherwise executed by one or multiple processors.

In various embodiments, the CSG lists 120-124 and entries in the CSG lists 120-124 may be implemented in different formats. Several examples of formats for CSG lists 120-124 and/or entries in the CSG lists 120-124 are provided below, but the patent application should not be limited by these examples, as other formats are contemplated.

Example one:

| Identifier: ' | | Structure: transparent | | | Optional |
|---|---|---|---|---|---|
| | | | | | |
| File size: 5n (where n ≥10 bytes) | | | Update activity: low | | |
| Access Conditions: | | | | | |
| READ | | PIN | | | |
| UPDATE | | PIN | | | |
| DEACTIVATE | | ADM | | | |
| ACTIVATE | | ADM | | | |

| Bytes | Description | | | M/O | Length |
|---|---|---|---|---|---|
| 1 to 3 | 1^{st} CSG (highest priority) | | | M | 3 bytes |
| 4 to 5 | Network ID | | | M | 3 bytes |
| 6 to 8 | 2^{nd} CSG | | | M | 3 bytes |
| : | 2^{nd} Network ID: | | | M | 3 bytes |
| (3n-2) to 3n | N^{th} CSG (lowest priority) | | | O | 3 bytes |
| | Nth Network ID | | | | |

| | | | | | |
|---|---|---|---|---|---|
| CSG Contents: xxxxxx: Network ID Contents: Mobile Country Code (MCC) followed by the Mobile Network Code (MNC). Coding: according to technical specification 24.008. | | | | | |

Example two:

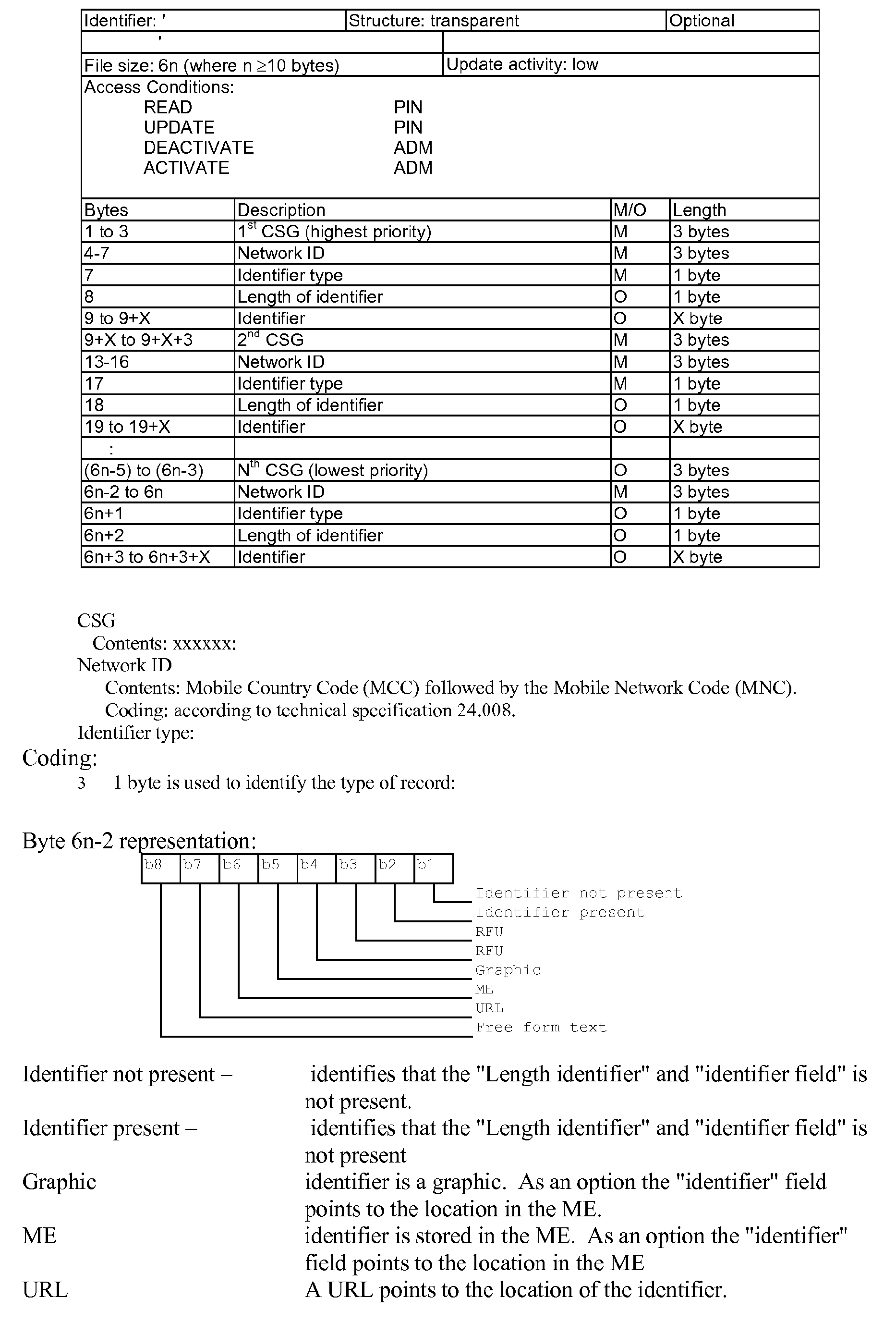

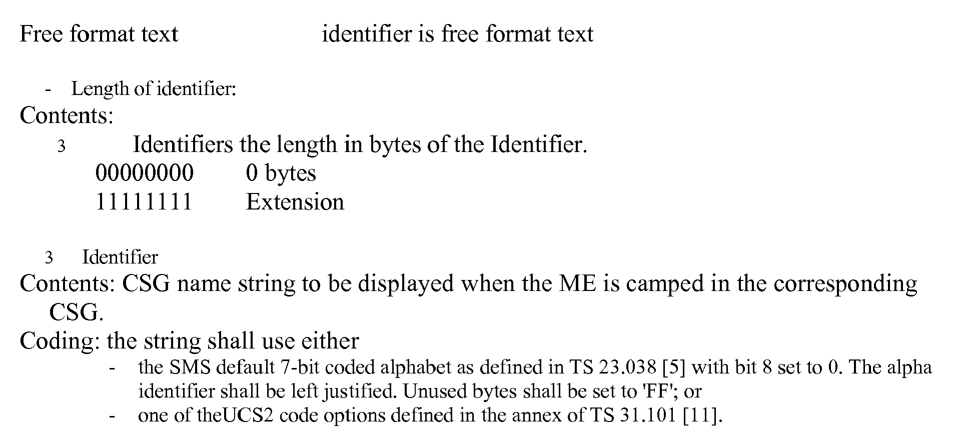

Example three:

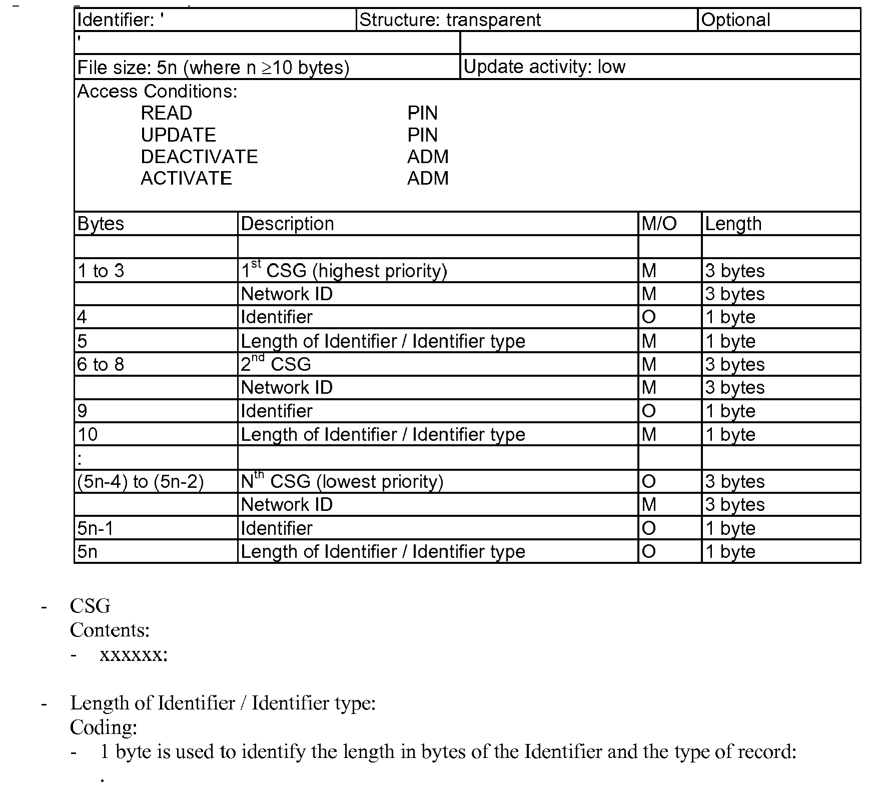

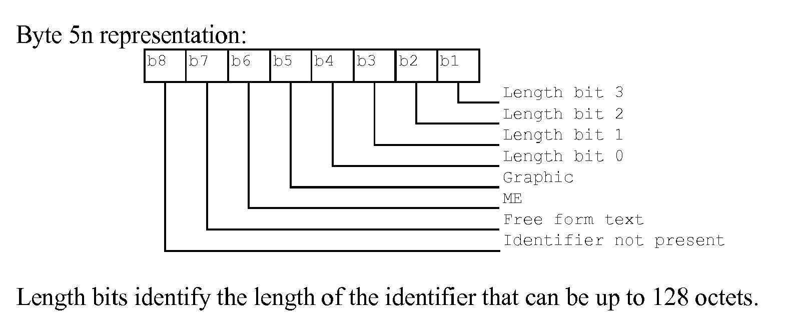

Example four:

| Identifier: | | Structure: transparent | | | Optional |
|---|---|---|---|---|---|
| | | | | | |
| File size: 4n (where n ≥10 bytes) | | | Update activity: low | | |
| Access Conditions: | | | | | |
| READ | | PIN | | | |
| UPDATE | | PIN | | | |
| DEACTIVATE | | ADM | | | |
| ACTIVATE | | ADM | | | |

| Bytes | Description | | | M/O | Length |
|---|---|---|---|---|---|
| 1 to 3 | 1^{st} CSG (highest priority) | | | M | 3 bytes |
| | Network ID | | | M | 3 bytes |
| 4 | 1^{st} CSG Time interval | | | M | 1 byte |
| 5 to 7 | 2^{nd} CSG | | | M | 3 bytes |
| | Network ID | | | M | 3 bytes |
| 8 | 2^{nd} CSG Time interval | | | M | 1 byte |
| | | | | | |
| (4n-3) to (4n-1) | N^{th} CSG (lowest priority) | | | O | 3 bytes |
| | Network ID | | | M | 3 bytes |
| 4n | N^{th} CSG Time interval | | | O | 1 byte |

| | | | | | |
|---|---|---|---|---|---|
| - Time interval. Contents: the time interval to indicate how long the CSG is valid. Coding: the time interval is coded in integer multiples of n minutes. The range is from n minutes to a maximum value. The value '00' indicates that no attempts shall be made for the CSG. The encoding is: - '00': No attempts; - '01': n minutes; - '02': 2n minutes; - 'YZ': (16Y+Z)n minutes (maximum value). | | | | | |

Example five:

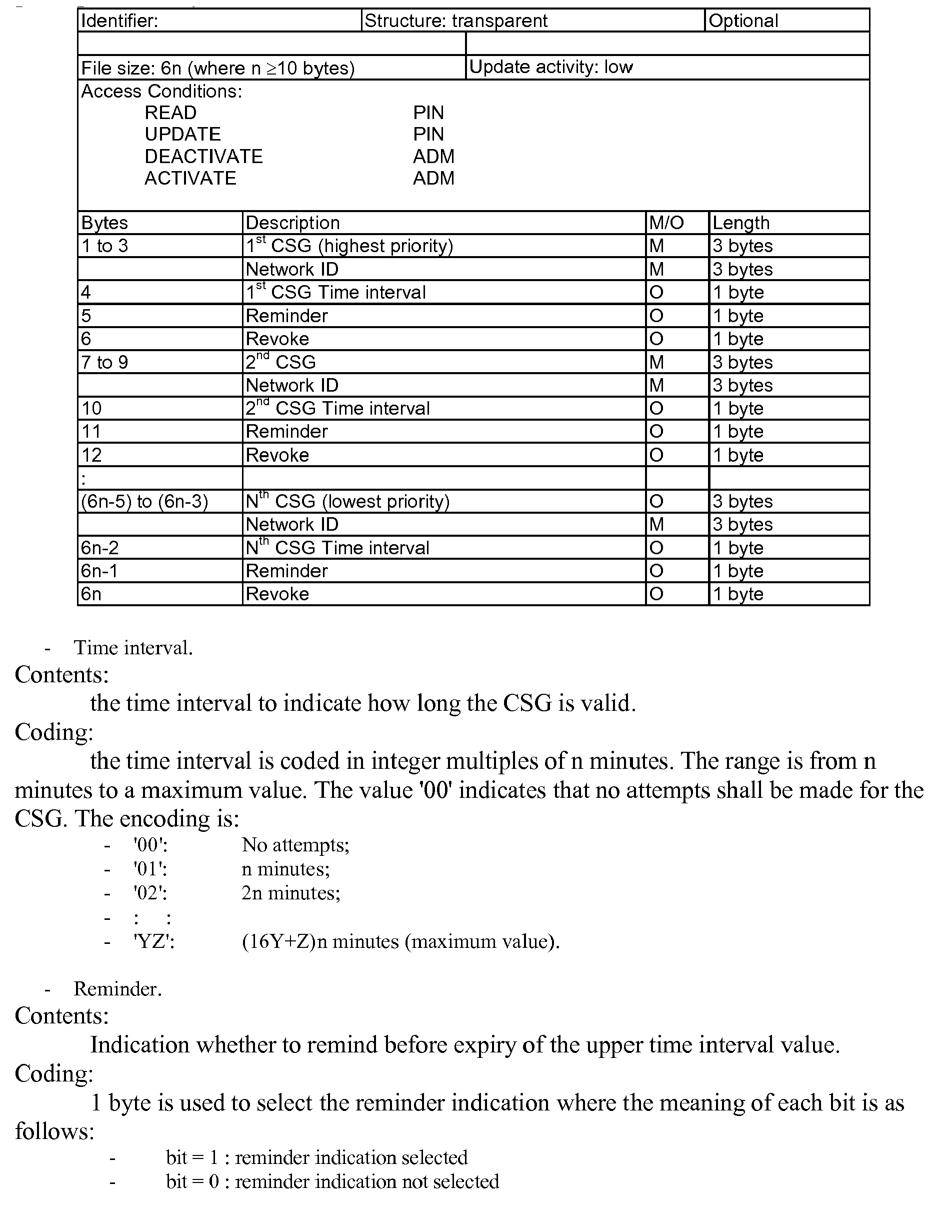

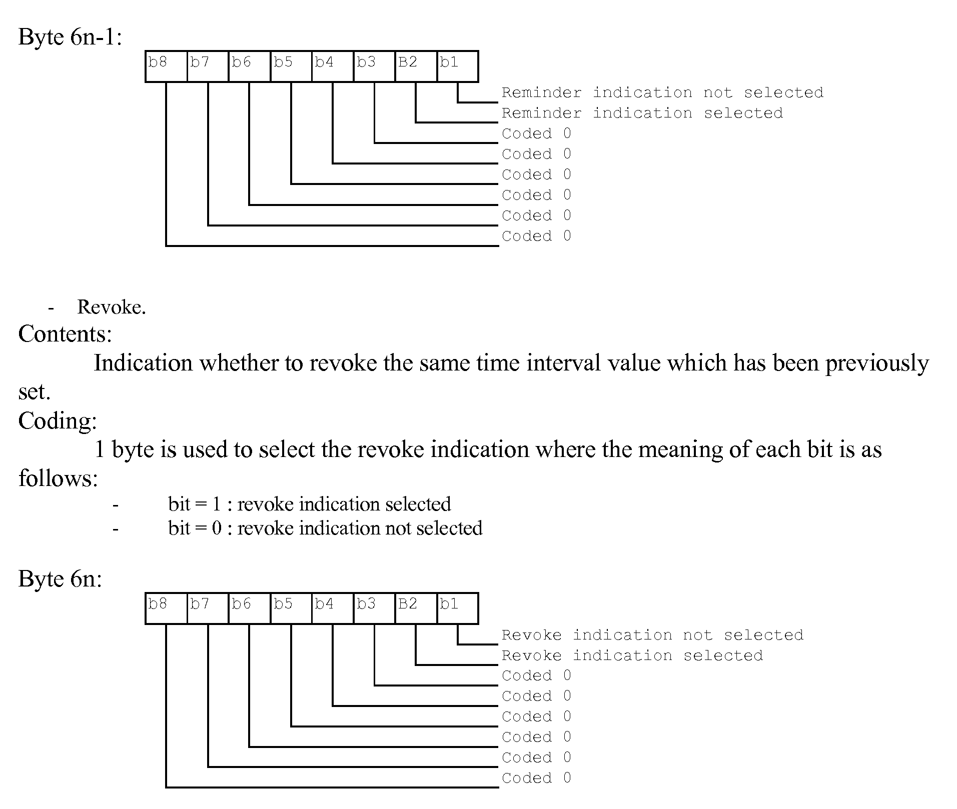

Example six:

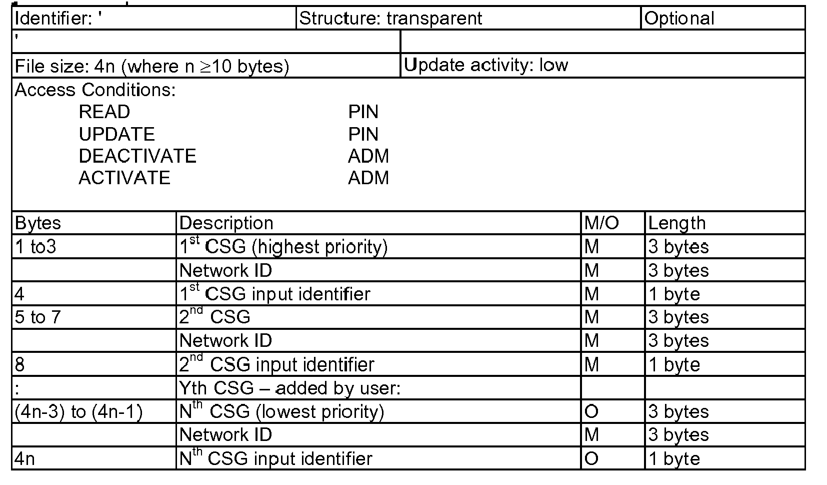

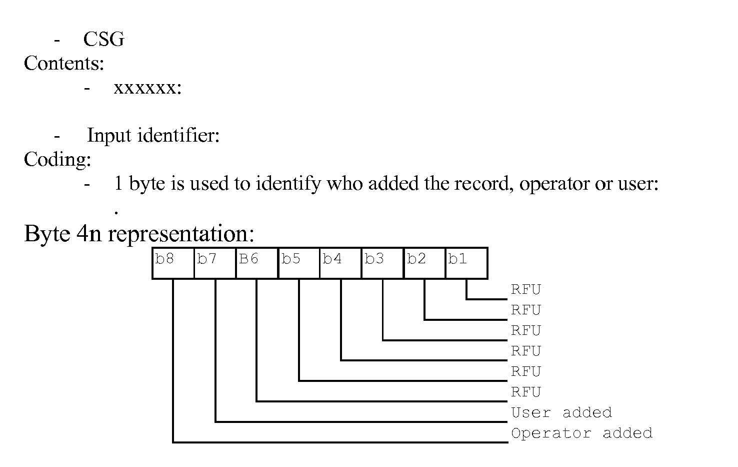

Example seven:

Closed Subscriber Group Managed Object

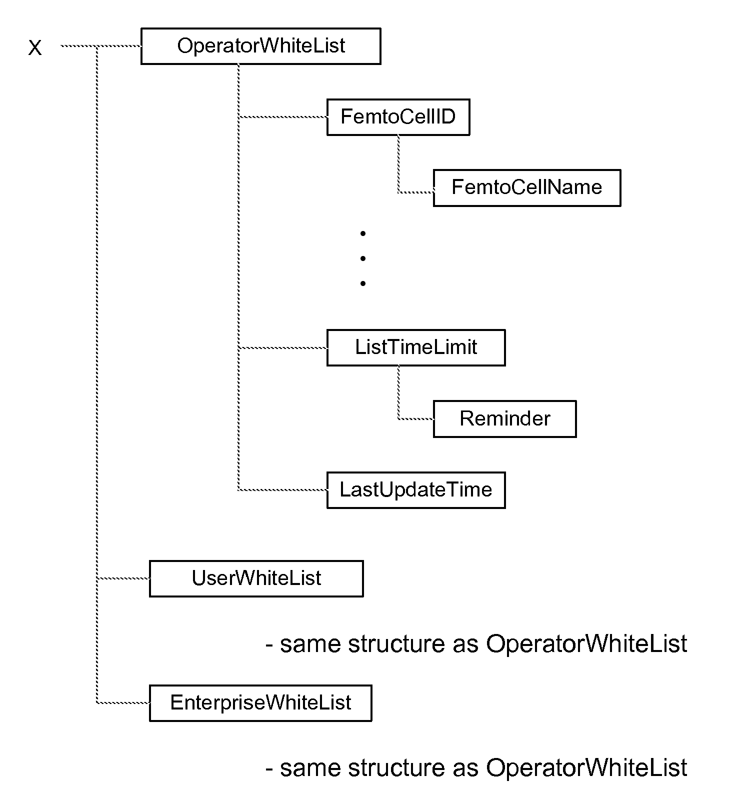

The format of the managed object is to follow the format for use with the Open Mobile Alliance Device Management specifications. The definition and use of Managed Objects is specified in the OMA White Paper on Provisioning Objects.

### Node X

| Status | Tree Occurrence | Format | Min. Access Types |
|---|---|---|---|
| REQUIRED | One | Node | Get |

| | | | |
|---|---|---|---|
| The X node is an interior node that groups together the parameters of the Closed Subscriber Group management object. The X node is attached to the Device Management managed object tree. The node format contains a management object identifier specified for the CSG MO. In this case the management object ID for CSG would look similar if not exactly as, urn:oma:dm:oma-csg:1.0. | | | |

### Status: in order for the CSG MO to exist node X is mandatory

Occurrence: only one occurrence of the CSG MO DM management object tree is envisioned as needed.
Format: the format of this node is the object identifier format described in the OMA DM specifications for type Node
Minimum Access Type: while the minimum access type is Get (read) other access types such as change can be with appropriate permissions
Values: the value of this node is the MO ID registered with OMA for the CSG MO

### Node X/OperatorWhiteList

| Status | Tree Occurrence | Format | Min. Access Types |
|---|---|---|---|
| REQUIRED | ZeroOrOne | Node | Get |

| | | | |
|---|---|---|---|
| Occurrence: ZeroOrOne Format: Node Minimum Access Types: Get Values: N/A | | | |

### Node X/OperatorWhiteList/FemtoCellID

| Status | Tree Occurrence | Format | Min. Access Types |
|---|---|---|---|
| REQUIRED | OneOrMore | Int | Get |

Occurrence: OneOrMore
Format: integer
Minimum Access Types: Get
Values: network specific

### Node X/OperatorWhiteList/FemtoCellID/FemtoCellName

| Status | Tree Occurrence | Format | Min. Access Types |
|---|---|---|---|
| Optional | ZeroOrOne | Chr | Get |

Occurrence: ZeroOrOne
Format: character
Minimum Access Types: Get
Values: network specific

### Node X/OperatorWhiteList/ListTimeLimit

| Status | Tree Occurrence | Format | Min. Access Types |
|---|---|---|---|
| Optional | ZeroOrOne | Int | Get |

Occurrence: ZeroOrOne
Format: Integer
Access Types: Get
Values: 0 to 65,535 (16 bits)

### Node X/OperatorWhiteList/ListTimeLimit/Reminder

| Status | Tree Occurrence | Format | Min. Access Types |
|---|---|---|---|
| Optional | ZeroOrOne | Int | Get |

Occurrence: ZeroOrOne
Format: Integer
Access Types: Get
Values: 0 to 65, 535

### Node X/OperatorWhiteList/LastUpdateTime

| Status | Tree Occurrence | Format | Min. Access Types |
|---|---|---|---|
| Optional | ZeroOrOne | Int | Get |

Occurrence: ZeroOrOne
Format: Integer
Access Types: Get
Values: system specific

### NodeX/UserWhiteList

As described for OperatorWhiteList

### Node X/EnterpriseWhiteList

As described for OperatorWhiteList

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method of establishing a wireless link, comprising:
a user equipment 'UE' receiving a transmission from a closed subscriber group 'CSG' cell; and
when the CSG cell is associated with a CSG identified in a user defined list of CSGs stored in the UE, establishing a wireless link between the UE and the CSG cell.

2. The method of claim 1, further comprising:
when the CSG cell is associated with a CSG identified in an operator defined list of CSGs stored in the UE and the CSG is associated with a network that provides access to the UE, establishing a wireless link between the UE and the CSG cell;
when the CSG cell is associated with a CSG identified in an enterprise defined list of CSGs, establishing a wireless link between the UE and the CSG cell; and
terminating the wireless link at least by an expiration of a time duration defined for the CSG by an entry in the user defined list of CSGs,
wherein after the expiration of the time duration defined for the CSG, the entry in the user defined list identifying the CSG is one of deleted and marked void, and wherein the user defined list of CSGs comprises at least one entry identifying a CSG, and wherein the at least one entry defines a time duration that the entry is valid.

3. The method of claim 2, further comprising a reminder indicator that promotes the UE providing a warning prior to the expiration of the time duration which the CSG is provisioned for the UE, wherein the reminder indicator comprises a reminder time period interval that is configurable.

4. The method of any one of the preceding claims, further comprising:
scanning a frequency band to identify CSG cells;
selecting a CSG associated with a CSG cell identified during scanning the frequency band; and
adding an entry identifying the selected CSG to the user defined CSG list.

5. The method of any one of the preceding claims, wherein the user defined list of CSGs comprises a plurality of entries, each entry identifying a CSG, and
wherein, when the user equipment receives transmissions from CSG cells associated with different CSGs, establishing the wireless link between the UE and the CSG cell comprises establishing the wireless link between the UE and the CSG cell associated with the highest priority CSG, wherein the priority of CSGs is indicated by their order in the user defined list of CSGs.

6. A user equipment (UE), comprising:
a memory to contain a user defined list of closed subscriber groups 'CSGs';
a radio transceiver to receive a transmission from an at least one CSG cell and to establish a wireless link with a selected one of the at least one CSG cell; and
a selector component, when one of the at least one CSG cell is associated with a CSG identified in the user defined list of CSGs, to determine the selected one of the at least one CSG cells and to identify the selected one of the at least one CSG cell to the radio transceiver.

7. The UE of claim 6, wherein the memory comprises removable and non-removable memory, and further contains at least one of an operator defined list of CSGs and an enterprise defined list of CSGs, and further contains an operator defined list of CSGs and an enterprise defined list of CSGs, wherein when a CSG cell is associated with a CSG identified in one of the user defined list of CSGs, the operator defined list of CSGs, and the enterprise defined list of CSGs stored in removable memory, the selector component is arranged to determine the CSG cell to be the selected one of the at least one CSG cell.

8. The UE of claim 7, wherein each of a plurality of entries in the operator defined list of CSGs identifies a CSG and has a network identifier of the CSG, and
wherein each of a plurality of entries in the user defined list of CSGs identifies a CSG, wherein the selector component is arranged to determine the selected one of the at least one CSG cells based on the order of entries identifying the CSG associated with the at least one CSG cells.

9. The UE of claim 8, further comprising a user interface to receive inputs and
wherein the UE is able to reorder the entries in the user defined list of CSGs based on the inputs.

10. A method of provisioning a user equipment 'UE', comprising:
scanning a frequency bandwidth;
identifying an at least one closed subscriber group 'CSG' cell broadcasting in the frequency bandwidth;
displaying information about a CSG associated with the at least one CSG cell identified;
receiving an input selecting the CSG; and
when the CSG cell is associated with a user CSG, provisioning the CSG to a user defined CSG list stored by the UE,
wherein the user defined CSG list is used by the UE to establish wireless links with CSG cells.

11. The method of claim 10, further comprising:
when the CSG cell is associated with an operator CSG, provisioning the CSG to an operator defined CSG list stored by the UE, wherein the operator defined CSG list is used by the UE to establish wireless links with CSG cells, and wherein entries in the operator defined CSG list comprise information about a CSG comprising a CSG identifier and a network identifier; and
when the CSG cell is associated with an enterprise CSG, provisioning the CSG to an enterprise defined CSG list stored by the UE, wherein the enterprise defined CSG list is used by the UE to establish wireless links with CSG cells, and wherein entries in the enterprise defined CSG list comprise information about a CSG comprising a CSG identifier and a time duration, wherein the time duration indicates a period of time during which the CSG is provisioned for the UE.

12. The method of claim 10 or claim 11, wherein entries in the user defined CSG list comprise information about a CSG including a CSG identifier and a time duration, wherein the time duration indicates a period of time during which the CSG is provisioned for the UE.

13. The method of any one of claims 10 to 12, further comprising displaying information about a second CSG associated with a second at least one CSG cell identified, wherein the CSG associated with the at least one CSG cell identified and the second CSG associated with the second at least one CSG cell identified are displayed in an order specified by the user defined CSG list followed by an operator defined CSG list.

14. A computer readable medium having computer-readable code embodied therein for execution by a processor in of a computing device for causing said computing device to implement the steps of the method of any one of claims 1 to 5 or the steps of the method of any one of claims 10 to 13.
